# EUROPÄISCHE PATENTSCHRIFT

(11) **EP 2 121 401 B1**
(45) Veröffentlichungstag und Bekanntmachung des Hinweises auf die Patenterteilung: **28.07.2010**
(21) Anmeldenummer: 08707259.1
(22) Anmeldetag: 24.01.2008
(51) Int. Cl.: B60T 13/74, B60R 25/08

(54) **ELEKTROMECHANISCHE FESTSTELL-BREMSANLAGE UND ELEKTRONISCHES SYSTEM ZUM BETREIBEN DERSELBEN**
ELECTROMECHANICAL PARKING BRAKE SYSTEM, AND ELECTRONIC SYSTEM FOR THE OPERATION THEREOF
SYSTÈME DE FREIN DE STATIONNEMENT ÉLECTROMÉCANIQUE ET SYSTÈME ÉLECTRONIQUE POUR ACTIONNER LEDIT SYSTÈME DE FREIN DE STATIONNEMENT

(30) Priorität: 26.01.2007 DE 102007004941
(43) Veröffentlichungstag der Anmeldung: 25.11.2009
(73) Patentinhaber: Lucas Automotive GmbH, 56070 Koblenz (DE)
(72) Erfinder: KESSELGRUBER, Dirk, 56410 Montabaur (DE)
(74) Vertreter: Thum, Bernhard
(86) Internationale Anmeldenummer: PCT/EP2008/000548
(87) Internationale Veröffentlichungsnummer: WO 2008/089986

(56) Entgegenhaltungen:
- EP-A- 1 306 277
- EP-A- 1 884 420
- DE-A1-102004 059 546
- JP-A- 2000 118 357

## Beschreibung

Die Erfindung betrifft ein elektronisches System zum Betreiben einer elektromechanischen Feststell-Bremsanlage eines Fahrzeugs, mit wenigstens einer Eingabeeinheit zum Erfassen eines Fahrerwunsches, wenigstens einer Stelleinheit zum Zuspannen oder Lösen wenigstens einer Bremse und einer Steuer-/Regeleinheit, die dazu ausgebildet ist, den Fahrerwunsch auszuwerten und die wenigstens eine Stelleinheit anzusteuern, wobei die Steuer-/Regeleinheit wenigstens zwei Steuerkomponenten umfasst, von denen eine erste Steuerkomponente der wenigstens einen Eingabeeinheit und wenigstens eine zweite Steuerkomponente der wenigstens einen Stelleinheit zugeordnet werden kann.

### Stand der Technik

Eine elektromechanische Feststellbremsanlage ist unter anderem aus der DE 197 32 168 C1 bekannt. Als Stelleinheit dient hier eine von einem Elektromotor betätigte Spindel/Mutter-Anordnung, mittels der der Bremskolben einer Bremse der Betriebs-Bremsanlage mechanisch festgestellt werden kann.

Weiterhin zeigt die DE 41 29 919 A1 eine Feststellbremsanlage für Kraftwagen, bei der eine elektromotorische Fremdkraftbremsenbetätigung vorgesehen ist. Diese wird über eine Betätigungseinrichtung aktiviert und veranlasst mittels eines Elektromotors die elektromotorische Bremsenbetätigung. In einer Ausführungsform kann die elektromotorische Bremsenbetätigung zusätzlich mit einem elektronischen Steuergerät verbunden sein, das sowohl Signale von der Betätigungseinrichtung (manuelle Betätigung) wie auch von verbundenen Sensoren (automatische Betätigung) empfängt und in Abhängigkeit der empfangenen Signale die Bremsenbetätigung steuert.

Aus der DE 10 2004 059 546 A1 ist ein eingangs erwähntes elektronisches System zum Betreiben einer elektromechanischen Feststell-Bremsanlage bekannt. Die darin offenbarte Steuer-/Regeleinheit weist mehrere Steuerkomponenten auf, die in geeigneter Weise auf die Eingabeeinheit und die Stelleinheit örtlich sowie funktionell verteilt und darin integriert sind. Derartige Stelleinheiten mit integrierten Steuerkomponenten werden als "Smart"-Aktuatoren bezeichnet und bieten den Vorteil, dass ihre Verwendung den Bauraum, den Verdrahtungsaufwand sowie die e-lektro- magnetische Empfindlichkeit und die Störabstrahlung der Aktuatoren reduziert. Die Eingabeeinheit des offenbarten Systems befindet sich an einer vom Fahrer günstig zu bedienenden Stelle im Fahrzeuginnenraum und umfasst elektrische Schaltmittel zum Erfassen eines Fahrerwunsches zur Betätigung der Feststell-Bremsanlage.

Ferner zeigt das Dokument EP 1 306 277 A2 eine Steuerung für eine elektrisch angesteuerte Parkbremse, die eine Steuereinheit, Stellelemente und Bremsorgane umfasst, wobei die Steuereinheit über Eingänge verschiedene Zustandssignale einliest. Weiter sind ein Bedienungselement und ein Betriebsbremsensensor über einen solchen Eingang mit der Steuereinheit verbunden. Mittels einem an dem Bedienungselement angebrachten Betätigungshebel wird durch Ziehen des Hebels ein Signal zur Feststellung und durch Drücken des Hebels ein Signal zum Lösen der Parkbremse zur Steuereinheit gesendet. Wird das Bedienungselement zum Feststellen der Parkbremse betätigt, sendet die Steuereinheit ein Signal an die Stellelemente, woraufhin die Bremsorgane einrücken und eine Bremswirkung einsetzt. Dieses Feststellen erfolgt unabhängig von anderen Betriebszustandssignalen. Sobald das Bedienungselement zum Lösen der Parkbremse betätigt wird, erfolgt zuerst eine Überprüfung verschiedener Zustandssignale, wie zum Beispiel eines Zündungsbetriebszustandssignals und eines Betriebszustandsignals des Betriebsbremsensensors. Endsprechend dem jeweiligem

Status dieser Betriebszustandssignale bleibt die Parkbremse festgestellt oder wird die Parkbremse gelöst.

Weiterhin ist aus dem Dokument JP 2000 118357 A eine Diebstahlschutzeinrichtung für Fahrzeuge bekannt, die eine Betriebsbremse, eine Handbremse und eine Hilfsbremse aufweisen. Die Kraftübertragung von einem Fußpedal der Betriebsbremsenvorrichtung zu den Rädern erfolgt hier hydraulisch. Die Handbremsenvorrichtung weist ferner einen Handhebel auf, der über eine mechanische Kraftweiterleitung eine Antriebswelle blockieren kann. Die in diesem Dokument offenbarte Hilfsbremse umfasst in die hydraulischen Bremsleitungen eingebrachte Ventile, um über diese einen hydraulischen Druck aufrecht zu erhalten, so dass die Räder blockiert werden. Dies erfolgt in Verbindung mit einer aktivierten Handbremse. Ferner ist eine Eingabevorrichtung und eine Steuereinheit vorhanden, die mit dem Zündschloss verbunden ist. Diese Steuereinheit gibt die Blockierung der Räder durch die Hilfsbremse erst wieder frei, wenn eine über die Eingabevorrichtung eingegebene Identifikationsnummer mit einer voreingestellten Kennzahl übereinstimmt.

### Aufgabenstellung

Der Erfindung liegt die Aufgabe zugrunde, ein eingangs erwähntes elektronisches System zum Betreiben einer elektromechanischen Feststell-Bremsanlage im Hinblick auf Funktionsumfang und Sicherheit weiter zu entwickeln.

Zur Lösung der Aufgabe schlägt die Erfindung vor, dass die wenigstens eine zweite Steuerkomponente dazu eingerichtet ist, die Ansteuerung der wenigstens einen Stelleinheit unabhängig vom erfassten Fahrerwunsch zu sperren, wobei in der wenigstens einen zweiten Steuerkomponente wenigstens ein (vorzugsweise elektronischer) Code (Referenzcode) hinterlegt ist, anhand dessen die wenigstens eine Stelleinheit eindeutig dem Fahrzeug, in dem sie verbaut ist, zugewiesen werden kann.

Da die wenigstens eine zweite Steuerkomponente der wenigstens einen Stelleinheit zugeordnet bzw. in diese integriert ist, verfügt der/die "Smart"-Aktuator(en) über elektronische Mittel, um eigenständig darüber entscheiden zu können, ob eine für die wenigstens eine Stelleinheit vorliegende Ansteuerung zu sperren ist oder nicht. Wenn der über die wenigstens eine Eingabeeinheit erfasste Fahrerwunsch eine Ansteuerung zum Lösen der wenigstens einen Bremse vorgibt, ist hierbei insbesondere von Vorteil, dass dies von dem/den "Smart"-Aktuator(en) verhindert werden kann. Folglich kann die wenigstens eine Bremse unabhängig vom Fahrerwunsch in ihrem vorherigen (zugespannten) Zustand verbleiben.

Weiterhin kann vorgesehen sein, dass ein Sperren der Ansteuerung der wenigstens einen Stelleinheit nur dann möglich ist, wenn die wenigstens eine Bremse zugespannt ist. Demzufolge wird ein Lösen der wenigstens einen Bremse verhindert, falls z.B. gemäß einem über die wenigstens eine Eingabeeinheit erfassten Fahrerwunsch eine Ansteuerung dazu vorliegt. Allerdings ist abhängig vom Fahrerwunsch ein Zuspannen der wenigstens einen Bremse ausgehend von ihrem vorherigen (gelösten) Zustand möglich.

Ferner kann in einer Ausführungsform der Erfindung vorgesehen sein, dass die Steuer-/Regeleinheit wenigstens eine weitere Steuerkomponente umfasst, die mit der wenigstens einen zweiten Steuerkomponente zusammenwirken kann, um die vom Fahrerwunsch abhängige Ansteuerung der wenigstens einen Stelleinheit (wieder) frei zu schalten oder zu sperren. Die weitere Steuerkomponente kann also die Sperre (wieder) aufheben, so dass die Ansteuerung der wenigstens einen Stelleinheit (wieder) gemäß einem über die wenigstens eine Eingabeeinheit erfassten Fahrerwunsch erfolgen kann, insbesondere um ein (Wieder-)Lösen der wenigstens einen Bremse zu ermöglichen.

Darüber hinaus kann vorgesehen sein, dass die wenigstens eine weitere Steuerkomponente wenigstens einer weiteren Systemeinheit zugeordnet werden kann, die ausgebildet ist, um in ihrem aktivierten Zustand das Fahrzeug gegen eine unbefugte Benutzung zu sichern. Die wenigstens eine weitere Systemeinheit, die z.B. neben Zünd-, Lenkrad-, Tür- und Getriebeschloss eine elektronische Wegfahrsperre umfassen kann, wird nach dem Abstellen der Zündung, spätestens jedoch beim Verschließen des Fahrzeugs, aktiviert, um die vom Fahrerwunsch abhängige Ansteuerung der wenigstens einen Stelleinheit zu sperren.

Für den Fall, dass die wenigstens eine Bremse vor Aktivierung der wenigstens einen weiteren Systemeinheit aufgrund eines Fahrerwunsches noch nicht zugespannt ist, kann bei einer Weiterbildung der Erfindung vorgesehen sein, dass die wenigstens eine Bremse unabhängig vom Fahrerwunsch - also automatisch - zugespannt werden kann, wenn die wenigstens eine weitere Systemeinheit aktiviert ist.

Auch ist ein Freischalten der Ansteuerung der wenigstens einen Stelleinheit bei einer weiteren Ausführungsform der Erfindung erst (wieder) dann möglich, wenn sich die wenigstens eine weitere Systemeinheit nicht mehr in ihrem aktivierten Zustand befindet.

Der wesentliche Vorteil besteht also darin, dass einer elektromechanischen Feststell-Bremsanlage bzw. deren "Smart"-Aktuatoren die Funktion einer Wegfahrsperre zukommt, indem ein Lösen der wenigstens einen Bremse gesperrt werden kann. Dazu kann die elektromechanische Feststell-Bremsanlage für sich oder in Kombination mit anderen Systemen, die für den Betrieb des Fahrzeugs relevant sind, wie z.B. Starter, Kraftstoffzufuhr und Zündanlage, eingesetzt werden.

Zum Aktivieren oder Deaktivieren der wenigstens einen weiteren Systemeinheit, insbesondere im Fall einer elektronischen Wegfahrsperre, können Funk-/Infrarotsysteme, Transpondersysteme, elektronische Schlüssel, Codetasturen, Chipkartenleser oder dergleichen verwendet werden. Vorteilhafterweise erlauben diese Systeme einen codierten Eingriff, d.h. eine oder mehrere für den Betrieb des Fahrzeugs relevante Einheiten können durch Eingabe eines Codes gesperrt oder frei geschaltet werden.

Deshalb kann bei einer weiteren Ausführungsform der Erfindung vorgesehen sein, dass die wenigstens eine weitere Systemeinheit durch Eingabe wenigstens eines (vorzugsweise elektronischen) Codes aktivierbar oder deaktivierbar ist.

Ein Freischalten der Ansteuerung der wenigstens einen Stelleinheit ist nur dann möglich, wenn der wenigstens eine eingegebene Code mit dem wenigstens einen hinterlegten Code übereinstimmt, also der Eingabecode gleich dem Referenzcode ist.

Aufgrund der Codierung kann die wenigstens eine Stelleinheit nur in dem Fahrzeug betrieben werden, in dem sie ursprünglich verbaut wurde. Durch diese Maßnahme sind die "Smart"-Aktuatoren zum einen im Falle eines Diebstahls wertlos, was Diebe abschreckt; zum anderen sind sie nur von autorisierten Werkstätten, die über offizielle Mittel zum Hinterlegen bzw. Ändern des Referenzcodes verfügen, montier- bzw. austauschbar, was der allgemeinen Sicherheit dient.

Außer der Möglichkeit des Zugriffs autorisierter Werkstätten auf den Referenzcode zwecks Hinterlegung bzw. Änderung, kann vorgesehen sein, dass der wenigstens eine hinterlegte Code (Referenzcode) während des Produktionsprozesses des Fahrzeugs, z.B. beim Band-Ende-Test, hinterlegt werden kann. Damit wird sichergestellt, dass die wenigstens eine Stelleinheit eindeutig einem einzigen Fahrzeug zugewiesen wird.

Idealerweise, vor allem im Hinblick auf Funktionssicherheit und Reduzierung des Kabelaufwands, kann ferner vorgesehen sein, dass die Steuerkomponenten über wenigstens ein Kommunikationssystem, wie z.B. CAN-Bus, LIN-Bus oder dergleichen, zusammenwirken. Dabei könnte es sich einerseits um ein eigens für die Feststell-Bremsanlage vorgesehenes Kommunikationssystem handeln. Andererseits könnte aber auch ein im Fahrzeug ohnehin vorhandenes Kommunikationssystem (mit) verwendet werden, über das außerdem ein Zusammenwirken mit anderen Fahrzeugsystemen, z.B. einer mit ABS oder ESP ausgestatteten Betriebs-Bremsanlage oder einer Motorleistungssteuerung, möglich wäre. Darüber hinaus kann das wenigstens eine Kommunikationssystem für den Anschluss zusätzlicher Systemeinheiten ausgelegt sein, vor allem solcher, die zum Hinterlegen bzw. Ändern des Referenzcodes in der Werkstatt oder beim Band-Ende-Test erforderlich sind, wie z.B. Diagnosegeräte.

Es ist wohl festgestellt, dass sich eine elektromechanische Feststell-Bremsanlage, mit wenigstens einer Stelleinheit zum Zuspannen oder Lösen wenigstens einer Bremse, im Hinblick auf Funktionsumfang und Sicherheit erheblich weiter entwickeln lässt, wenn zum Betreiben derselben ein elektronisches System, wie zuvor dargestellt, verwendet wird.

Damit einhergehend ist die Feststell-Bremsanlage so ausgestaltet, dass Montage-/Demontagearbeiten an der wenigstens einen Stelleinheit und/oder der wenigstens einen Bremse, z.B. zum Wechseln der Bremsbeläge, nur dann möglich sind, wenn die wenigstens eine Bremse gelöst ist. Denn damit das Fahrzeug wirklich gegen eine unbefugte Benutzung gesichert ist, darf ein Lösen der wenigstens einen Bremse nur autorisierten Personen, z.B. Werkstattpersonal, erlaubt sein, weshalb Montage-/Demontagearbeiten auch nur von diesen ausgeführt werden dürfen.

Um dies sicherzustellen kann zusätzlich vorgesehen sein, dass die wenigstens eine Stelleinheit und/oder die wenigstens eine Bremse mechanisch derart ausgestaltet sind, dass eine zerstörungsfreie Montage/Demontage nicht möglich ist, wenn die wenigstens eine Bremse zugespannt ist.

### Ausführungsbeispiel

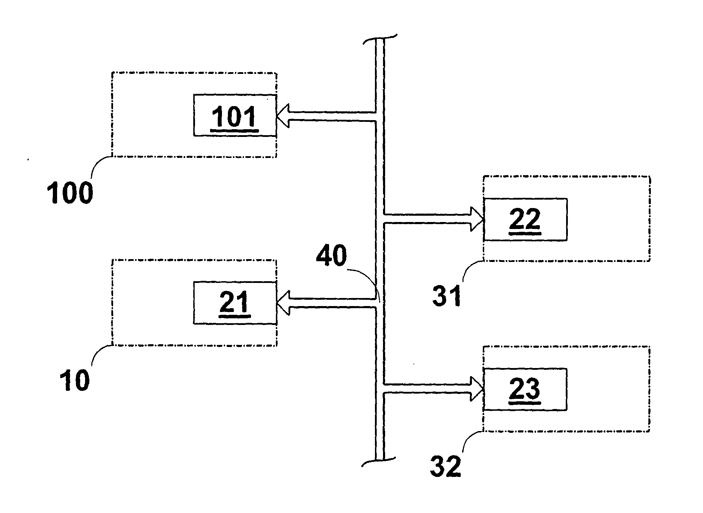

Die Erfindung wird im Folgenden anhand der einzigen Zeichnung, die ein bevorzugtes Ausführungsbeispiel eines erfindungsgemäßen elektronischen Systems als Blockschaltbild zeigt, näher erläutert.

Einer Systemeinheit 10, z.B. einer Eingabeeinheit 10, ist eine elektronische Steuerkomponente 21 zugeordnet, die, wie in der Figur gezeigt, in die Systemeinheit 10 integriert ist. Die Systemeinheit 10 dient zum Erfassen eines Fahrerwunsches zur Betätigung einer Feststell-Bremsanlage eines Fahrzeugs und umfasst z.B. elektrische Schaltmittel, die vom Fahrer zu bedienen sind. Die elektronische Steuerkomponente 21 wertet den Fahrerwunsch aus und bestimmt die Ansteuerung der Feststell-Bremsanlage. Dazu wirkt die elektronische Steuerkomponente 21 über ein Kommunikationssystem 40, z.B. einen CAN- oder LIN-Bus, mit anderen elektronischen Steuerkomponenten 22 und 23 zusammen, die Stelleinheiten 31 und 32 zugeordnet bzw. in diese integriert sind. Die Stelleinheiten 31 und 32 betätigen jeweils nicht näher dargestellte Bremsen des Fahrzeugs und bilden jeweils mit den Bremsen eine Baugruppe. Die Stelleinheiten mit den darin integrierten elektronischen Steuerkomponenten 22 und 23 stellen so bezeichnete "Smart"-Aktuatoren dar.

An das Kommunikationssystem 40 ist eine weitere elektronische Steuerkomponente 101 angeschlossen, die einer weiteren Systemeinheit 100 zugeordnet bzw. in diese integriert ist. Bei der in der Figur dargestellten weiteren Systemeinheit 100 handelt es sich um eine elektronische Wegfahrsperre, die das Fahrzeug gegen eine unbefugte Benutzung sichert. Für das Aktivieren oder Deaktivieren der Wegfahrsperre umfasst die weitere Systemeinheit 100 elektrische Schaltmittel, die vom Fahrer zu bedienen sind, wie z.B. das Zünd-/Lenkradschloss. Durch Zusammenwirken mit den elektronischen Steuerkomponenten 22 und 23 der Stelleinheiten 31 und 32 kann für die Funktion der Wegfahrsperre die Ansteuerung der Stelleinheiten 31 und 32 unabhängig von dem an der Systemeinheit 10 eingegebenen Fahrerwunsch gesperrt werden, so dass bei aktivierter Wegfahrsperr-Funktion ein Lösen der Bremsen nicht möglich ist. Es wird also ein mittels der Systemeinheit 10 erfasster Fahrerwunsch ignoriert, weil die elektronische Wegfahrsperre im aktivierten Zustand eine höhere Priorität besitzt.

Die Entscheidung über das Sperren der vom Fahrerwunsch abhängigen Ansteuerung der Stelleinheiten 31 und 32 findet also "vor Ort" in den zugeordneten elektronischen Steuerkomponenten 22 und 23 statt. Alternativ wäre es aber auch möglich, die Entscheidung über das Sperren der vom Fahrerwunsch abhängigen Ansteuerung der Stelleinheiten 31 und 32 bereits in der elektronischen Steuerkomponente 21, die der als Eingabeeinheit fungierenden Systemeinheit 10 zugeordnet ist, stattfinden zu lassen.

Das Sperren der Ansteuerung "vor Ort" durch die elektronischen Steuerkomponenten 22 und 23 bietet die zusätzliche Sicherheit, eine elektronische Wegfahrsperre mit codiertem Eingriff bereitzustellen. Dabei wird, vorzugsweise beim Band-Ende-Test, den das Fahrzeug bei seiner Produktion durchläuft, ein elektronischer Code C_SOLL als Referenzcode in den elektronischen Steuerkomponenten 22 und 23 hinterlegt. Bei Aktivierung der Wegfahrsperr-Funktion empfängt die weitere Systemeinheit 100, z.B. mittels elektronischem Schlüssel oder Chipkartenleser, einen elektronischen Code C_IST als Eingabecode. Dieser Eingabecode wird über die elektronische Steuerkomponente 101 und das Kommunikationssystem 40 an die Steuerkomponenten 22 und 23 übermittelt, um dort mit dem hinterlegten Referenzcode verglichen zu werden. Stimmt der Eingabecode mit dem Referenzcode überein, also gilt C_IST = C_SOLL, dann wird die Ansteuerung der Stelleinheiten 31 und 32 frei geschaltet, so dass ein Lösen oder Zuspannen der Bremsen in unmittelbarer Abhängigkeit vom Fahrerwunsch möglich ist.

Es sei angemerkt, dass die elektronischen Steuerkomponenten 21, 22, 23 und 101 neben schaltungstechnischer Hardware üblicherweise ohnehin auch mit programmierbarer Hardware, wie z.B. Mikrocomputern, ausgestattet sind, so dass eine Implementierung des erfindungsgemäßen elektronischen Systems mit einem verhältnismäßig geringen Aufwand software-technisch erfolgen kann. So kann z.B. das Hinterlegen des Referenzcodes zur elektronischen Codierung der Wegfahrsperr-Funktion bzw. der Stelleinheiten 31 und 32 , der Vergleich des Referenzcodes mit dem Eingabecode sowie das Sperren oder Freischalten der Ansteuerung der Stelleinheiten 31 und 32 allein durch Programmierung der übergeordneten elektronischen Steuer-/Regeleinheit bzw. der elektronischen Steuerkomponenten 21, 22, 23 und 101 erfolgen; also ohne dass Kosten für zusätzliche schaltungstechnische Hardware entstehen.

Da nicht näher dargestellt, sei noch angemerkt, dass das erfindungsgemäße elektronische System über das Kommunikationssystem 40 auch an andere Systeme des Fahrzeugs angeschlossen ist, die gleichfalls Steuerkomponenten aufweisen, die Systemeinheiten zugeordnet bzw. in diese integriert sind. Stellvertretend für solche Systeme ist hier z.B. eine mit ABS oder ESP ausgestattete Betriebs-Bremsanlage oder eine Motorleistungssteuerung anzuführen. Folglich kann die Steuer-/Regeleinheit des erfindungsgemäßen elektronischen Systems auch Steuerkomponenten anderer Systemeinheiten einschließen, insbesondere die der Betriebs-Bremsanlage.

## Patentansprüche

1. Elektronisches System zum Betreiben einer elektromechanischen Feststell-Bremsanlage eines Fahrzeugs, mit
- wenigstens einer Eingabeeinheit (10) zum Erfassen eines Fahrerwunsches,
- wenigstens einer Stelleinheit (31, 32) zum Zuspannen oder Lösen wenigstens einer Bremse, und
- einer Steuer-/Regeleinheit, die dazu ausgebildet ist, den Fahrerwunsch auszuwerten und die wenigstens eine Stelleinheit (31, 32) anzusteuern,
wobei die Steuer-/Regeleinheit wenigstens zwei Steuerkomponenten (21, 22, 23) umfasst, von denen eine erste Steuerkomponente (21) der wenigstens einen Eingabeeinheit (10) und wenigstens eine zweite Steuerkomponente (22, 23) der wenigstens einen Stelleinheit (31, 32) zugeordnet werden kann,
**dadurch gekennzeichnet, dass**
die wenigstens eine zweite Steuerkomponente (22, 23) dazu eingerichtet ist, die Ansteuerung der wenigstens einen Stelleinheit (31, 32) unabhängig vom erfassten Fahrerwunsch zu sperren, wobei in der wenigstens einen zweiten Steuerkomponente (22, 23) wenigstens ein Code (C_SOLL) hinterlegt ist, anhand dessen die wenigstens eine Stelleinheit (31, 32) eindeutig dem Fahrzeug, in dem sie verbaut ist, zugewiesen werden kann.

2. System nach Anspruch 1,
wobei das Sperren der Ansteuerung der wenigstens einen Stelleinheit (31, 32) nur dann möglich ist, wenn die wenigstens eine Bremse zugespannt ist.

3. System nach Anspruch 1 oder 2,
wobei die Steuer-/Regeleinheit wenigstens eine weitere Steuerkomponente (101) umfasst, die mit der wenigstens einen zweiten Steuerkomponente (22, 23) zusammenwirken kann, um die vom Fahrerwunsch abhängige Ansteuerung der wenigstens einen Stelleinheit (31, 32) frei zu schalten oder zu sperren.

4. System nach Anspruch 3,
wobei die wenigstens eine weitere Steuerkomponente (101) wenigstens einer weiteren Systemeinheit (100) zugeordnet werden kann, die dazu ausgebildet ist, das Fahrzeug in ihrem aktivierten Zustand gegen eine unbefugte Benutzung zu sichern.

5. System nach Anspruch 4,
wobei die wenigstens eine Bremse unabhängig vom Fahrerwunsch zugespannt werden kann, wenn die wenigstens eine weitere Systemeinheit (100) aktiviert ist.

6. System nach Anspruch 4 oder 5,
wobei ein Freischalten der Ansteuerung der wenigstens einen Stelleinheit (31, 32) erst dann möglich ist, wenn sich die wenigstens eine weitere Systemeinheit (100) nicht mehr in ihrem aktivierten Zustand befindet.

7. System nach einem der Ansprüche 4 bis 6,
wobei die wenigstens eine weitere Systemeinheit (100) durch Eingabe wenigstens eines Codes (C_IST) aktivierbar oder deaktivierbar ist.

8. System nach Anspruch 7,
wobei ein Freischalten der Ansteuerung der wenigstens einen Stelleinheit (31, 32), nur dann möglich ist, wenn der wenigstens eine eingegebene Code mit dem wenigstens einen hinterlegten Code übereinstimmt (C_IST = C_SOLL).

9. System nach einem der Ansprüche 1 bis 8,
wobei der wenigstens eine hinterlegte Code (C_SOLL) während des Produktionsprozesses des Fahrzeugs hinterlegt werden kann.

10. System nach einem der Ansprüche 1 bis 9,
wobei das Zusammenwirken der Steuerkomponenten (21, 22, 23, 101) über wenigstens ein Kommunikationssystem (40) möglich ist.

11. Elektromechanische Feststell-Bremsanlage, mit
- wenigstens einer Stelleinheit (31, 32) zum Zuspannen oder Lösen wenigstens einer Bremse,
**dadurch gekennzeichnet, dass**
zum Betreiben der Fäststell-Breffisanlage ein elektronisches System nach einem der Ansprüche 1 bis 10 verwendet wird.

12. Bremsanlage nach Anspruch 11,
wobei Montage-/Demontagearbeiten an der wenigstens einen Stelleinheit (31, 32) und/oder der wenigstens einen Bremse nur dann möglich sind, wenn die wenigstens eine Bremse gelöst ist.

13. Bremsanlage nach Anspruch 11 oder 12,
wobei die wenigstens eine Stelleinheit (31, 32) und/oder die wenigstens eine Bremse mechanisch derart ausgestattet sind, dass eine zerstörungsfreie Montage/Demontage nicht möglich ist, wenn die wenigstens eine Bremse zugespannt ist.

## Claims

1. An electronic system for operating an electromechanical parking brake system of a vehicle, comprising
- at least one input unit (10) for obtaining a driver's requirement,
- at least one actuating unit (31, 32) for actuating or releasing at least one brake, and
- one control/regulating unit which is adapted to evaluate the driver's requirement and to control the at least one actuating unit (31, 32),
wherein the control/regulating unit comprises at least two control components (21, 22, 23) of which a first control component (21) may be assigned to the at least one input unit (10) and at least a second control component (22, 23) may be assigned to the at least one actuating unit (31, 32),
**characterised in that**
the at least one second control component (22, 23) is adapted to inhibit the control of the at least one actuating unit (31, 32) regardless of the obtained driver's requirement, with at least one code (C_SOLL) being stored in the at least one second control component (22, 23), on the basis of which the at least one actuating unit (31, 32) may be unambiguously assigned to the vehicle in which it is installed.

2. The system according to claim 1,
wherein inhibiting of controlling the at least one actuating unit (31, 32) is only possible if the at least one brake is applied.

3. The system according to claim 1 or 2,
wherein the control/regulating unit comprises at least one additional control component (101) which may cooperate with the at least one second control component (22, 23) in order to enable or inhibit the control of the at least one actuating unit (31, 32), which is dependent on the driver's requirement.

4. The system according to claim 3,
wherein the at least one additional control component (101) may be assigned to another system unit (100) which is adapted to safeguard the vehicle against an unauthorised use in its activated condition.

5. The system according to claim 4,
wherein the at least one brake may be applied regardless of the driver's requirement, if the at least one additional system unit (100) is activated.

6. The system according to claim 4 or 5,
wherein enabling of controlling the at least one actuating unit (31, 32) is only possible if the at least one additional system unit (100) is no longer in its activated condition.

7. The system according to one of claims 4 to 6,
wherein the at least one additional system unit (100) may be activated or deactivated by the input of at least one code (C_IST).

8. The system according to claim 7,
wherein enabling of controlling the at least one actuating unit (31, 32) is only possible if the at least one input code matches the at least one stored code (C_IST = C_SOLL).

9. The system according to one of claims 1 to 8,
wherein the at least one stored code (C_SOLL) may be stored during the production process of the vehicle.

10. The system according to one of claims 1 to 9,
wherein the cooperation of the control components (21, 22, 23, 101) is possible via at least one communication system (40).

11. An electromechanical parking brake system, comprising
- at least one actuating unit (31, 32) for applying or releasing at least one brake,
**characterised in that**
an electronic system according to one of claims 1 to 10 is used for the operation of the parking brake system.

12. The brake system according to claim 11,
wherein assembly/disassembly work at the at least one actuating unit (31, 32) and/or at the at least one brake is only possible if the at least one brake is released.

13. The brake system according to claim 11 or 12,
wherein the at least one actuating unit (31, 32) and/or the at least one brake is/are of such a mechanical configuration that a non-destructive assembly/disassembly is not possible if the at least one brake is applied.

## Revendications

1. Système électronique utilisé pour actionner un système de frein de stationnement électromécanique pour véhicule automobile, comprenant
- au moins une unité de saisie (10) pour entrer la demande d'un conducteur,
- au moins une unité de réglage (31, 32) pour serrer ou desserrer au moins un frein et
- une unité de commande/régulation conçue pour évaluer la demande d'un conducteur et pour commander ladite unité de réglage (31, 32),
ladite unité de commande/régulation comportant au moins deux éléments de commande (21, 22, 23) dont un premier élément de commande (21) peut être associé à l'unité de saisie (10) et au moins un deuxième élément de commande (22, 23) à l'unité de réglage (31, 32),
**caractérisé en ce que**
le deuxième élément de commande (22, 23) est conçu pour bloquer la commande de l'unité de réglage (31, 32) indépendamment de la demande du conducteur saisie, au moins un code (C_SOLL), à l'aide duquel l'unité de réglage (31, 32) peut être associée sans équivoque au véhicule dans lequel celle-ci est montée, étant enregistré dans le deuxième élément de commande (22, 23).

2. Système selon la revendication 1,
le blocage de la commande de l'unité de réglage (31, 32) n'étant possible que lorsque le frein est serré.

3. Système selon la revendication 1 ou 2,
l'unité de commande/régulation comprenant au moins un élément de commande supplémentaire (101) capable de coopérer avec le deuxième élément de commande (22, 23) pour libérer ou bloquer, en fonction de la demande du conducteur, la commande de l'unité de réglage (31, 32).

4. Système selon la revendication 3,
l'élément de commande supplémentaire (101) pouvant être associé pour le moins à une unité système supplémentaire (100) conçue pour empêcher l'utilisation par personne non autorisée du véhicule lorsque celle-ci est activée.

5. Système selon la revendication 4,
le frein pouvant être serré indépendamment de la demande d'un conducteur lorsque l'unité système supplémentaire (100) est activée.

6. Système selon la revendication 4 ou 5,
la libération de la commande de l'unité de réglage (31, 32) n'étant possible que lorsque l'unité système supplémentaire (100) ne se trouve plus dans son état activé.

7. Système selon l'une des revendications 4 à 6,
l'unité système supplémentaire (100) pouvant être activée ou désactivée par la saisie d'au moins un code ( C_IST).

8. Système selon la revendication 7,
la libération de la commande de l'unité de réglage (31, 32) n'étant possible que lorsque le code saisi correspond au code enregistré (C_IST = C_SOLL).

9. Système selon la revendication 1 à 8,
le code enregistré (C_SOLL) pouvant être enregistré pendant le processus de fabrication du véhicule.

10. Système selon la revendication 1 à 9,
la coopération des éléments de commande (21, 22, 23, 101) étant possible par le biais d'au moins un système de communication (40).

11. Système de frein de stationnement électromécanique, comprenant
- au moins une unité de réglage (31, 32) pour serrer ou desserrer au moins un frein,
**caractérisé en ce que**
il est utilisé un système électronique selon l'une des revendications 1 à 10 pour faire fonctionner le système de frein de stationnement.

12. Système selon la revendication 11,
des travaux de montage/démontage sur l'unité de réglage (31, 32) et/ou sur le frein n'étant possibles que lorsque le frein est desserré.

13. Système selon la revendication 11 ou 12,
l'unité de réglage (31, 32) et/ou le frein étant mécaniquement conçus de telle sorte qu'un montage et un démontage non destructifs s'avèrent impossibles lorsque le frein est serré.
